(19) **Europäisches Patentamt**

**European Patent Office**

**Office européen des brevets**

(11) **EP 1 677 028 A1**

(12) **EUROPEAN PATENT APPLICATION**
published in accordance with Art. 158(3) EPC

(43) Date of publication:
05.07.2006 Bulletin 2006/27

(51) Int Cl.:
*F16F 15/16* (1968.09)    *B30B 15/06* (1968.09)
*B23Q 1/50* (1995.01)

(21) Application number: 03754202.4

(22) Date of filing: 20.10.2003

(86) International application number:
**PCT/JP2003/013388**

(87) International publication number:
**WO 2005/038291 (28.04.2005 Gazette 2005/17)**

(84) Designated Contracting States:
**DE ES IT**

(71) Applicant: Pascal Engineering Corporation
Konoike
Itami-shi
Hyogo 664-8502 (JP)

(72) Inventors:
• **MACHIDA, Masahiro,**
c/o PASCAL ENGINEERING CORP.
Itami-shi,
Hyogo 664-0006 (JP)

• **YOTSUBAYASHI, Hiroyuki,**
**PASCAL ENGINEERING CORP.**
Itami-shi,
Hyogo 664-0006 (JP)

(74) Representative: **Senior, Alan Murray**
**J.A. KEMP & CO.,**
**14 South Square,**
**Gray's Inn**
**London WC1R 5LX (GB)**

(54) **BALANCER MECHANISM FOR ROTATING SHAFT**

(57)     To provide a balancer mechanism where a balancing rotary moment, which offsets at least a part of a rotary moment operating on a rotary shaft, operates on the rotary shaft by a gas spring to reduce the rotary moment simply and reliably.

The balancer mechanism for rotary shaft (8) is provided with a cam member (10) fixed to the left end of rotary shaft (3), a cam follow-up member (15) which makes contact with the cam member (10) to follow it up, and a gas spring (20) comprising a gas spring (20) elastically energizing the cam follow-up member (15) toward the cam member (10) and operates a balancing rotary moment offsetting at least a part of the rotary moment of rotary shaft on the rotary shaft (3) via the cam follow-up member (15) and the cam member (10).

Fig. 1

EP 1 677 028 A1

**Description**

TECHNICAL FIELD

The present invention relates to a balancer mechanism for reducing a rotary moment which acts on a rotary shaft from members supported by the rotary shaft which is rotatably supported by one or more shaft supports.

BACKGROUND ART

In an indexer, crank press or robot arm, etc., rotary shafts are rotatably supported on one or more shaft supports and members such as a table, a movable disc, and an arm are supported on the rotary shaft.

For example, in the indexer, a pair of rotary shafts fixed to a table are rotatably supported on a pair of shaft supports, and a driving force is applied by an electric motor to the rotary shaft to rotationally drive the table.

The table is provided with a turn table, rotatable around a shaft perpendicular to the axial center of the rotary shaft and its drive mechanism, a work is detachably mounted on the turn table to machine.

Usually, it is difficult make the center of gravity of the table and the work mounted on the table to conform with the rotation center (axial center of rotary shaft) because various shapes and sizes of works are set to the indexer. Therefore, the rotary moment caused by the off-set load of the table and work operates on the rotary shaft and increases the load of the electric motor.

Accordingly, a balance counter is installed in the table, etc. to make the center of gravity of table and the work to conform with the rotation center, but the responsiveness at the time of rotating and stalling the table and the work deteriorates.

This problem relates to not only an indexer, but also various equipments not free from the rotary moment from members supported by means of a rotary shaft rotatably on the shaft support, such as crank press, robot arm, etc.

However, when the rotational center of the table and work does not conform with the center of gravity, the magnitude of the rotary moment acting on the rotary shafts changes according to the angle of rotation of the rotary shaft (table and work).

A rotary table with a pressure applying mechanism has been disclosed in Japanese Laid-Open Patent Publication 2001-277059. In this pressure applying mechanism, an air-operated hole is formed at the end of a rotary shaft, a first compression surface and a second compression surface being formed on the shaft so as to face to the hole. An air-supply member is inserted into the air-operated hole of the rotary shaft, the first or second compression surface receives pressurized air supplied from a first or a second port of the air-supply member, and a rotary moment to a first or a second direction operates on the rotary shaft. Thus, a balancing rotary moment is generated which cancels at least a part of a rotary moment caused by the offset load of a rotary table and a work.

However, in this rotary table, the air-operated hole is formed at the end of rotary shaft, the first compression surface and the second compression surface being formed at the wall of the shaft, an air-supply member being inserted into the air-operated hole, and an air passage and a pressure-air supply system also become necessary, complicating the structure and increasing the manufacturing cost. In order to correspond to the rotary moment changing according to the angle of rotation of the rotary shaft, an air valve and a controller can also be provided to adjust the pressure of a pressure-air supplied to the air-operated hole, but the structure is further complicated with increased manufacturing cost.

The object of present invention is to generate a balancing rotary moment which cancels at least a part of a rotary moment acting on a rotary shaft, by means of a gas spring to reduce the rotary moment simply and reliably. Another object is to improve the responsiveness at the time of rotating and stalling members supported by the rotary shafts, the other object is to generate the balancing rotary moment having a magnitude corresponding to the magnitude of the rotary moment on the rotary shafts. The other object is to simplify the structure. The other object is to make it easy to install and use in various existing equipment in which a rotary moment is operated on the rotary shaft by the members supported by the rotary shaft, and so on.

SUMMARY OF THE INVENTION

The present invention relates to a rotary shaft balancer mechanism for reducing a rotary moment operating from members rotatably supported on the rotary shaft rotatably supported on one or more shaft supports, characterized by comprising a cam member fixed to an end of the rotary shaft, a cam follower which makes contact with the cam member to follow it up, and a gas spring for elastically energizing the cam follower to the cam member and for generating a balancing rotary moment canceling at least a part of the rotary moment via the cam follower and the cam member.

The rotary shaft balancer mechanism can be applied to equipment having a rotary shaft where a rotary moment is operated from members supported by the rotary shaft, such as a rotary shaft which rotatably supports a table detachably mounted with a work in an indexer, a rotary shaft which rotatably supports the crank shaft of a crank mechanism driving a movable member up and down in a crank press, and a rotary shaft which rotatably supports a robot arm, etc. Above rotary member is due to the wight of members by the rotary shaft.

In the rotary shaft balancer, a cam member is fixed to an end of the rotary shaft, a cam follower is elastically energized toward the cam member, pressed against the cam member and makes contact with it, and the cam follower follows up the cam member rotating integrally with the rotary shaft. The balancing rotary moment, which cancels at least a part of the rotary moment, operates on the rotary shaft by the gas spring via the cam follower and the cam member to reduce the rotary moment.

Thus, it is possible to reduce the rotary moment simply and reliably by the gas spring, thereby reducing the load of the drive mechanism for driving the rotary shaft, with improved responsiveness at the time of rotating and stalling the members supported by the rotary shaft. Moreover, the balancer mechanism comprises a simple construction with a cam member, a cam follower and a gas spring, with favorable manufacturing cost. Furthermore, it can be easily installed and used in various existing equipment in which a rotary moment operates on the rotary shaft from members supported by the rotary shaft and is excellent in flexibility.

Next, a preferable and practicable constitution of the present invention will be described.

The cam member may be composed of a disc member having an axial center eccentric to the axial center of the rotary shaft and the cam follower is constructed so as to contact with the periphery of the disc member.

The cam member can be made in a simple shape, and the cam follower smoothly follows up the cam member. The balancing rotary moment operates on the rotary shaft via the cam follower and cam member to reduce the rotary moment. Moreover, the magnitude of the rotary moment changes according to the angle of rotation of the rotary shaft, but the position of inputting a force from the cam follower to the cam member, and its direction and magnitude can be properly changed so as to generate a balancing rotary moment having a magnitude corresponding to the magnitude of the rotary moment on the rotary shaft.

The cam follower may be composed of a roller member rotatably mounted to an output member of the gas spring. The cam follower may make contact with the periphery of the cam member to follow it up more smoothly for preventing wear and damage of the cam member and cam follower.

The direction in which the cam follower is elastically energized by the gas spring faces the axial center of the rotary shaft. The gas spring can be fixed and mounted, simplifying the assembly of the gas spring while the balancing rotary moment operates on the rotary shaft with a magnitude corresponding to the magnitude of the rotary moment.

BRIEF DESCRIPTION OF THE DRAWINGS

Fig. 1 is a front view of an indexer having a rotary shaft balancer mechanism relating to an embodiment of the present invention.
Fig. 2 is a left side view of the indexer.
Fig. 3 is a III-III line sectional view of Fig. 2.
Fig. 4 ~ Fig. 7 are operation schematic diagrams of a rotary shaft balancer mechanism, Fig. 4 shows a state in which the angle of rotation of rotary shaft is 0°, Fig. 5 shows a state in which the angle of rotation of rotary shaft is about 30°, Fig. 6 shows a state in which the angle of rotation of the rotary shaft is 90°, and Fig. 7 shows a state in which the angle of rotation of the rotary shaft is about 150°.
Fig. 8 is a schematic diagram of a balancing rotary moment operating on the rotary shaft,
Fig. 9 is a chart showing the balancing rotary moment operating on the rotary shaft according to the angle of rotation of the rotary shaft.
Fig. 10 is a left side view of an indexer having a balancer mechanism relating to a modified embodiment.

DETAILED DESCRIPTION OF THE PREFERRED EMBODIMENTS

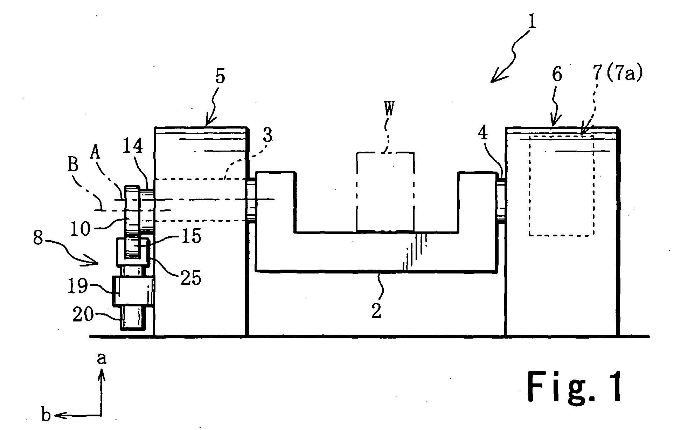

The embodiment described below is an example of the case of applying a rotary shaft balancer mechanism of the present invention to an indexer in which a work to be machined by a working machine is detachably mounted. Moreover, arrows a and b of Fig. 1 shows, respectively upward and leftward.

As shown in Fig. 1, an indexer 1 is provided with a table 2, a pair of rotary shafts 3, 4 fixed to the table 2, a left shaft support mechanism 5 including a shaft support for rotatably supporting the rotary shaft 3, a right shaft support mechanism 6 including a shaft support for rotatably supporting the rotary shaft 4, a rotational drive mechanism 7 having an electric motor 7a for rotationally driving the table 2 and the rotary shafts 3, 4 around the axial center A of the rotary shafts 3, 4, and a rotary shaft balancer mechanism 8 (hereafter referred to as a balancer mechanism 8). Moreover, the construction of the table 2, the rotary shaft 3 and the support mechanism 5 differ more or less in Fig. 1 and Fig. 2 ~ Fig. 7, but they are described by indicating with same reference numerals members essentially same.

The rotational drive mechanism 7 is provided in the vicinity of right shaft support mechanism 6, a driving force being input from the rotational drive mechanism 7 to the rotary shaft 4, with the table 2 being rotationally driven. A turn table rotatable around a shaft perpendicular to the axial center A of the rotary shafts 3, 4 and its drive mechanism (omitted) are provided in the table 2, on which a work W to be machined is detachably mounted, work W.

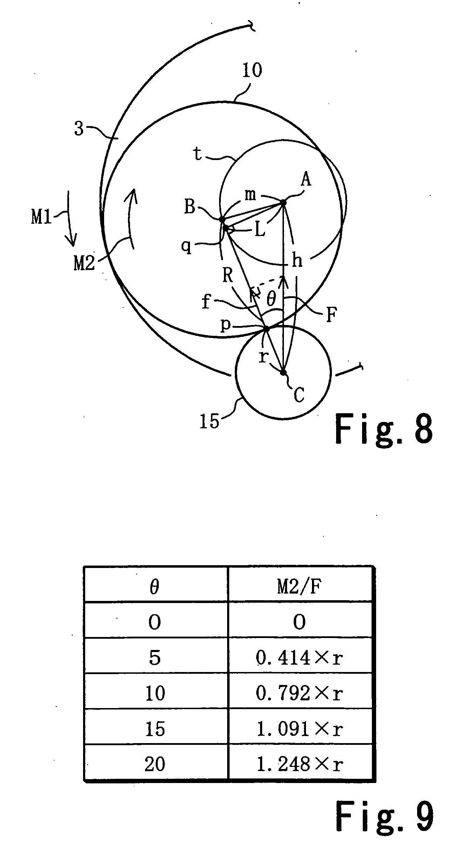

When the center of gravity of the table 2 and the work W mounted on the table 2 do not conform with the axial center A of rotary shafts 3, 4, a rotary moment M1 (shown in Fig.8) caused by an offset load of these table 2 and work W operates on the rotary shafts 3, 4.

The balancer mechanism 8 is a mechanism for reducing the rotary moment M1 generated by the weight of members (table 2 and work W) supported by the rotary shafts 3, 4 on the rotary shafts 3, 4, which are rotatably supported by the shaft support mechanisms 5, 6.

The balancer mechanism 8 is described in detail hereafter.

As shown in Fig. 1 ~ Fig. 7, the balancer mechanism 8 is provided with a cam member 10 fixed to the left end of rotary shaft 3, a cam follower 15 which makes contact with the cam member 10 to follow it up from the slightly lower side, and a gas spring 20 elastically energizing the cam follower 15 toward the cam member 10 (upward) and generates a balancing rotary moment M2 (shown in Fig.8) for canceling at least a part of the rotary moment M1 on the rotary shaft 3 via the cam follower 15 and the cam member 10.

The left end face of the rotary shaft 3 is exposed from the left end of shaft supporting mechanism 5 to the outside, a short shaft member 14 made eccentric to the axial center A of rotary shaft 3 is fixed to the left end face of the rotary shaft 3, the cam member 10 being fixed to the left end face of the shaft member 14.

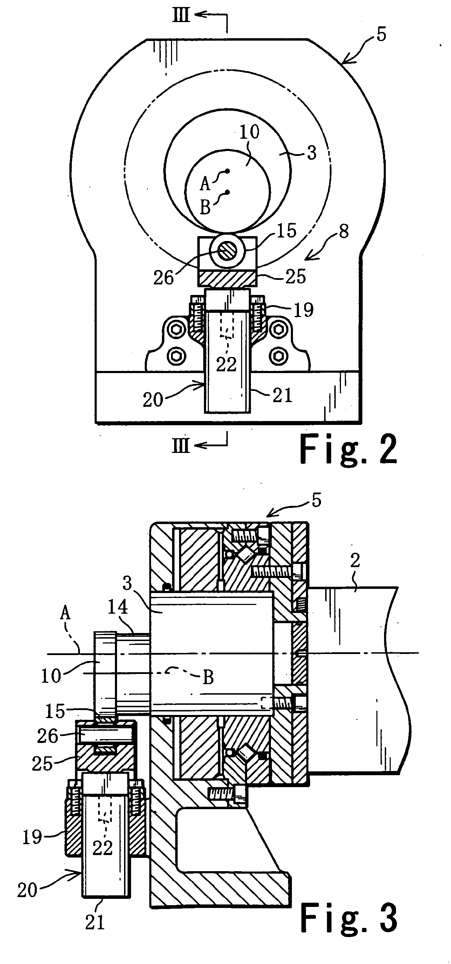

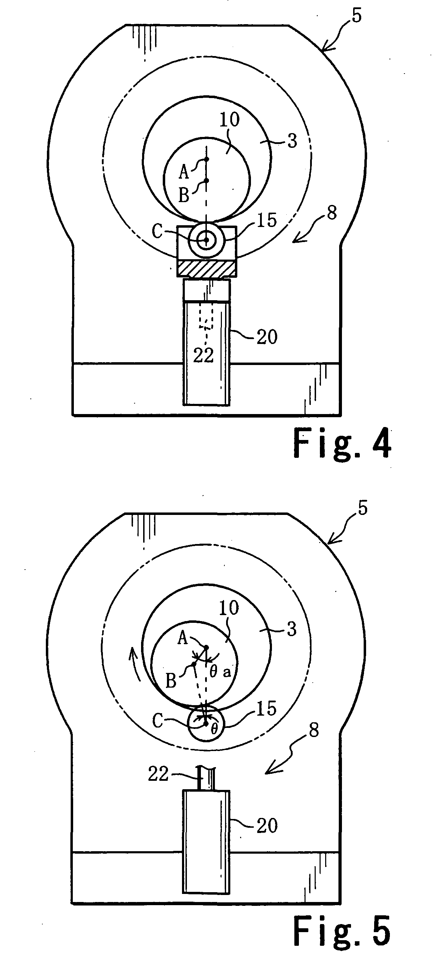

The cam member 10 made of a circular disk member in a position eccentric to the axial center A of rotary shaft 3 has a center B and is constructed so that the cam follower 15 makes contact with the periphery of the cam member 10. The cam follower 15 is made of a roller member rotatably mounted to an output member of the gas spring 20. In this instance, when the position of center of gravity of the table 2 and work W is located at the lowest side and the rotary moment M1 is in a state in which it does not act on the rotary shaft 3 (e. g., a state of Fig. 1), the center B of disc member 10 is set up just below the axial center A of rotary shaft 3 (see Fig. 2, Fig. 4).

The gas spring 20 is arranged in a standing posture below the cam member 10 and' shaft member 14, a cylinder member 21 of the gas spring 20 being fixed to the frame of shaft support mechanism 5 by a bracket 19, etc. An output member 22 of the gas spring 20 protrudes upward from the cylinder member 21 and is elastically energized upwardly by a pressurized-air filled in the cylinder member 21. A bracket 25 is fixed to the upper end of output member 22, both ends of a roller shaft 26 being fixed to the bracket 25, with the roller member 15 being rotatably supported on the roller shaft 26.

The balancing rotary moment M2 acting on the rotary shaft 3 is described here after with reference to Fig. 8. Moreover, the radius of cam member 10 is R, the radius of roller member 15 is r, the eccentric amount of the center B of cam member 10 is m, the angle of $\angle$ ACB is $\theta$, and the energization force which elastically energizes the roller member 15 upward by the gas spring 20 is F.

As shown in Fig. 8, the locus of center B of the cam member 10 becomes a circle t, and $\theta_a$ ranges from 0 to about 25°. When the angle of rotation $\theta_a$ of rotary shaft 3 where B is located at the lowest side is 0, $\theta$ becomes the minimum angle of $\theta$° where the angle of rotation $\theta_a$ of the rotary shaft 3 is 0° or 180°, and $\theta$ becomes a maximum angle of about 25° where the angle of rotation $\theta_a$ of rotary shaft 3 is 90° or 270°.

A force $f = F \times \cos \theta$ directing from p to B is input from the roller member 15 to the cam member 10.

The length between A and q becomes a lever to the force f, the balancing rotary moment $M2 = f \times L = F \times \cos \theta \times L$ operating on the rotary shaft 3.

Here, if $\theta$ is an angle close to about 25°, L can be approximate to
$L = (R + r) \times \tan \theta$, and M2 can be approximate to

$$M2 = F \times \cos \theta \times (R + r) \times \tan \theta = F \times (R + r) \times \sin \theta.$$

According to the cosine law at $\triangle ABC$,
$h = (R + r) \times \cos \theta + [(R + r)^2 \times \cos^2 \theta - (R + r)^2 + m^2]^{1/2}$, therefore

$$M2 = F \times \cos \theta \times [(R + r) \times \cos \theta + [(R + r)^2 \times \cos^2 \theta - (R + r)^2 + m^2]^{1/2}] \times \sin \theta$$

Here, if r : R : m = 6 : 15 : 8,

$$M2 = F \times \cos\theta \times [21/6 \times r \times \cos\theta + (21^2/6^2 \times \cos^2\theta \times r^2 - 21^2/6^2 + 8^2/6^2 \times r^2)^{1/2}] \times \sin\theta$$

$$= F \times \cos\theta \times \sin\theta \, [3.5 \times \cos\theta + (12.25 \times \cos^2\theta + 5.52)^{1/2}] \times r$$

At this time, the value of M2/F when changing $\theta$ every 5° in a range of 0° ~ 20°.

As is evident from this chart, the greater the $\theta$ becomes in a range of 0° ~ about 25°, the greater the balancing of the rotary moment M2 becomes.

The functions and effect of balancer mechanism 8 will be described next.

In the balancer mechanism for rotary shaft 8, the cam member 10 consisting of a disc member having the center B eccentric to the axial center A of rotary shaft 3 as is fixed to the left end of rotary shaft 3, the gas spring 20 is arranged in a standing posture below cam member 10, and the cam follower 15 consisting of a roller member is rotatably mounted to the upper end of the output member 22 of gas spring 20.

By the gas spring 20, the cam follower 15 is elastically energized upward toward the cam member 10, pressed to make contact with the periphery of the cam member 10, and the cam follower 15 follows the cam member 10 rotating integrally with the rotary shaft 3.

When the center of gravity of the table 2 and the work W mounted to table 2 do not conform with the axial center A of rotary shaft 3, the rotary moment M1 caused by the offset load of these table 2 and the work W operates on the rotary shafts 3, 4, but the balancing rotary moment M2, which cancels at least a part of rotary moment M1, operates on the rotary shaft 3 via the cam follower 15 and the cam member 10 by the gas spring 20.

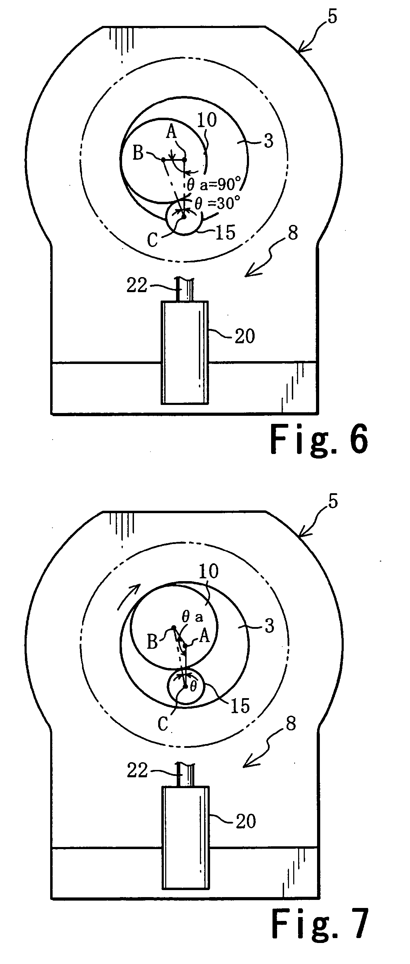

The magnitude of rotary moment M1 acting on the rotary shaft 3 changes according to the angle of rotation $\theta_a$ of rotary shaft 3, if the maximum rotary moment M1 is $M_0$, the magnitude of rotary moment M1 becomes $|M_0 \sin\theta_a|$. As shown in Fig. 6, if the angle of rotation $\theta_a$ of rotary shaft 3 is 90° (270°), the rotary moment M1 maximizes, and the balancing rotary moment M2 also maximizes.

For example, as shown in Fig. 5, if the angle of rotation $\theta_a$ of rotary shaft 3 increases between 0 and 90°, the rotary moment M1 increases and the balancing rotary moment M2 also increases. For example, as shown in Fig. 7, if the angle of rotation $\theta_a$ of rotary shaft 3 increases between 90 and 180°, the rotary moment M1 decreases and the balancing rotary moment M2 also decreases.

As described above, the balancer mechanism 8 enables reducing the rotary moment M1 simply and reliably by the operation of the balancing rotary moment M2, which cancels at least a part of the rotary moment M1, on the rotary shaft 3 by the gas spring 20, enabling reducing the load of rotational drive mechanism 7 driving the rotary shaft 4 and improving the responsiveness when rotating and stopping the rotation of the table 2 and the work W supported by the rotary shafts 3, 4.

Moreover, the balancer mechanism 8 is of simple construction, being provided with cam member 10, cam follower 15 and gas spring 20, favorable in manufacturing cost. Furthermore, it can be easily installed and used in various existing equipment in which a rotary moment operates by members supported by rotary shafts, also excellent in flexibility.

The cam member 10 consists of the circular disc member having the center B eccentric to the axial center A of rotary shaft 3 and is so constructed that the cam follower 15 makes contact with the periphery of the cam member 10. The cam member 10 can be made in a simple shape, and the cam follower 15 can smoothly follow up the cam member 10. Moreover, the balancing rotary moment M2 operates on the rotary shaft 3 via the cam follower 15 and the cam member 10 by the gas spring 20 to reduce the rotary moment M1 over roughly the entire region of 0 - 360° for the angle of rotation $\theta_a$ of rotary shaft 3.

Furthermore, the magnitude of rotary moment M1 changes according to the angle of rotation $\theta_a$ of rotary shaft 3, but the balancing rotary moment M2 having a magnitude corresponding to the magnitude of rotary moment M1 reliably operates on the rotary shaft 3 by properly changing the position for inputting a force from the cam follower 15 to the cam member 10 and the direction and magnitude of the force by the gas spring 20.

The cam follower 15 consists of the roller member rotatably mounted to the output member 22 of gas spring 20, therefore the cam follower 15 can be in touch with the periphery of cam member 10 and follow up more smoothly, and wear and damage to the cam member 10 and cam follower 15 can be prevented to the utmost to prolong their life.

The cam follower 15 is constructed so that the direction in which the cam follower 15 is elastically energized by the gas spring 20 faces to the axial center of rotary shaft 3 and the gas spring 20 can be fixed and mounted, therefore the assembly of gas spring 20 is simplified while the balancing rotary moment M2 having a magnitude corresponding to the magnitude of the rotary moment M1 can reliably operate on the rotary shaft 3.

Next, modified embodiment partly changing above embodiment will be described.

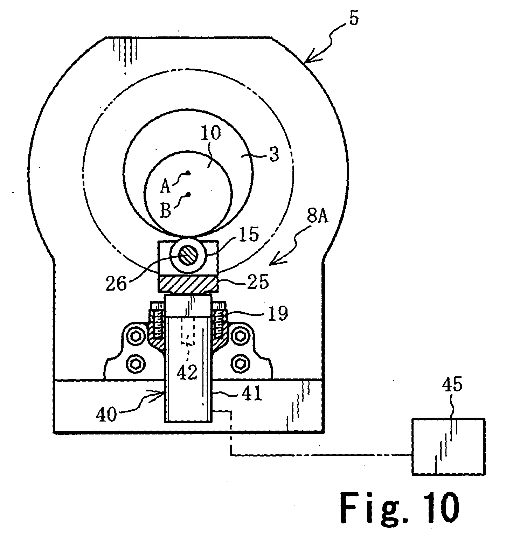

(1) As shown in Fig. 10, a hydraulic cylinder 40 is provided in place of the gas spring 20, and an accumulator 45 supplying roughly constant oil pressure may also be provided for the hydraulic cylinder 40. Namely, the hydraulic cylinder 40 and the accumulator 45 elastically energize the cam follower 15 to the cam member 10, and a balancing rotary moment M2, which cancels at least a part of rotary moment M1, operates on the rotary shaft 3 via the cam follower 15 and the cam member 10.

Here, the hydraulic cylinder 40 is arranged in a standing posture below the cam member 10 and shaft member 14, and a cylinder member 41 of hydraulic cylinder 40 is fixed to the frame of the shaft support mechanism 5 by the bracket 19. An output member 42 of hydraulic cylinder 40 (a piston rod 42) protrudes from the cylinder member 41 upward, oil pressure is supplied to a hydraulic operating chamber (omitted) in the cylinder member 41 by the accumulator 45, and the output member 42 becomes a state in which it is energized upward toward the cam member 10. A roller member 15 (cam follower 15) is rotatably mounted to the upper end portion of the output member 42.

Moreover, other constructions of the balancer mechanism 8 as well as their operation and effect are same as the balancer mechanism 8.

(2) The cam member 10 needs not to be made into a circular member and may also be constructed into various shapes such as a partly circular member, an elliptic member, a partly elliptic member, etc. so that the cam follower 15 makes contact with it and the balancing rotary moment M2 operates on the rotary shaft 3.

(3) The cam follower 15 does not need to be made into a roller member 15 and may also be constructed to be simply in contact with the cam member 10 to construct a follower capable of following up.

(4) The installation position and posture of the gas spring 20 and hydraulic cylinder 40 are properly changeable. For example, the hydraulic cylinder 40 may be installed on the side of cam member 10 in a transverse posture or the hydraulic cylinder 40 may be installed above the cam member 10 in a downward posture.

(5) A pair of balancer mechanisms 8, 8A may also be provided corresponding to the pair of rotary shafts 3, 4, and the balancing rotary moment may also operate on the rotary shafts 3, 4.

(6) Plural balancer mechanisms 8, 8A may also be provided for each of rotary shafts 3, 4.

(7) The elastic energizing force of gas spring 20 which elastically energizes the cam follower 15, i.e., the gas pressure in the gas spring 20 may also be adjustable. In this case, a gas pressure adjustment means consisting of a pressure adjusting valve and its controller for automatically adjusting the gas pressure according to the magnitude of rotary moment M1 may also be provided.

(8) The direction in which the cam follower 15 is elastically energized by the gas spring 20 and the hydraulic cylinder 40, i.e., the position (posture) of gas spring 20 and hydraulic cylinder 40 may also be adjustable. In this case, a position adjustment means consisting of a position adjusting mechanism and its controller for automatically adjusting the position of gas spring 20 and hydraulic cylinder 40 according to the magnitude of rotary moment M1 may also be provided.

(9) The balancer mechanisms 8, 8A can be applied not only to the indexer 1 but also to various equipment having rotary shafts in which a rotary moment is operated by the weight of members supported by the rotary shafts, such as a rotary shaft rotatably supporting the crankshaft of a crank mechanism which drives a movable member up and down in a crank press, and rotary shafts rotatably supporting a robot arm, etc.

### Claims

1. A rotary shaft balancer mechanism, for reducing a rotary moment operating on a rotary shaft from members supported by the rotary shaft rotatably supported on one or more shaft supports, **characterized by** comprising;

   a cam member fixed to an end of the rotary shaft,
   a cam follower which makes contact with the cam member to follow it up, and
   a gas spring for elastically energizing the cam follower toward the cam member and for generating on the rotary shaft a balancing rotary moment canceling at least a part of the rotary moment, via the cam follower and the cam member.

2. The rotary shaft balancer mechanism according to claim 1, wherein the cam member is composed of a disc member having an axial center eccentric to an axial center of the rotary shaft and the cam follower is constructed so as to contact with the periphery of the disc member.

3. The rotary shaft balancer mechanism according to claim 1, wherein the cam follower is composed of a roller member rotatably mounted to an output member of the gas spring.

4. The rotary shaft balancer mechanism according to claim 2 or 3, wherein a direction in which the cam follower is elastically energized by the gas spring faces the axial center of the rotary shaft.

**5.** The rotary shaft balancer mechanism according to any of claim 1~4, wherein the rotary shaft supports a table in which a work is detachably mounted in an indexer.

Fig. 1

Fig. 2

Fig. 3

Fig. 4

Fig. 5

Fig. 6

Fig. 7

Fig. 8

| $\theta$ | M2/F |
|----------|------|
| 0 | 0 |
| 5 | 0.414×r |
| 10 | 0.792×r |
| 15 | 1.091×r |
| 20 | 1.248×r |

Fig. 9

Fig. 10

## INTERNATIONAL SEARCH REPORT

| International application No. |
|---|
| PCT/JP03/13388 |

A. CLASSIFICATION OF SUBJECT MATTER
    Int.Cl⁷  F16F15/16, B30B15/06, B23Q1/50

According to International Patent Classification (IPC) or to both national classification and IPC

B. FIELDS SEARCHED

Minimum documentation searched (classification system followed by classification symbols)
    Int.Cl⁷  F16F15/16, B30B15/06, B23Q1/50

Documentation searched other than minimum documentation to the extent that such documents are included in the fields searched
    Jitsuyo Shinan Koho          1922-1996    Jitsuyo Shinan Toroku Koho    1996-2004
    Kokai Jitsuyo Shinan Koho    1971-2004    Toroku Jitsuyo Shinan Koho    1994-2004

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | US 5544576 A  (SANKYO SEISAKUSHO CO.),<br>13 August, 1996 (13.08.96),<br>Full text; Figs. 5, 6<br>& JP 7-116897 A<br>Full text; Figs. 5, 6<br>& DE 4437958 A        & KR 160532 B<br>& IT 94840855 A | 1-4<br>5 |
| X<br>Y | US 5544577 A  (SANKYO SEISAKUSHO CO.),<br>13 August, 1996 (13.08.96),<br>Full text; Figs. 5 to 8<br>& JP 7-116898 A<br>Full text; Figs. 5 to 8<br>& DE 4437957 A        & KR 160534 B<br>& IT 94840856 A | 1-4<br>5 |

☐ Further documents are listed in the continuation of Box C.      ☐ See patent family annex.

| | |
|---|---|
| *    Special categories of cited documents:<br>"A"  document defining the general state of the art which is not considered to be of particular relevance<br>"E"  earlier document but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |
| Date of the actual completion of the international search<br>    15 January, 2004 (15.01.04) | Date of mailing of the international search report<br>    27 January, 2004 (27.01.04) |
| Name and mailing address of the ISA/<br>    Japanese Patent Office | Authorized officer |
| Facsimile No. | Telephone No. |

Form PCT/ISA/210 (second sheet) (July 1998)

## INTERNATIONAL SEARCH REPORT

| | International application No. |
|---|---|
| | PCT/JP03/13388 |

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2001-277059 A  (Canon Inc.),<br>09 October, 2001 (09.10.01),<br>Full text; all drawings<br>(Family: none) | 5 |

Form PCT/ISA/210 (continuation of second sheet) (July 1998)